# EUROPEAN PATENT SPECIFICATION

(11) **EP 4 521 390 B1**
(45) Date of publication and mention of the grant of the patent: **11.02.2026**
(21) Application number: 24797087.4
(22) Date of filing: 24.04.2024
(51) Int. Cl.: G10K 11/16, G10K 11/168, B60R 13/08

(54) **SOUNDPROOF HEAT DISSIPATION COVER, COVER MEMBER, AND PRODUCTION METHOD FOR SOUNDPROOF HEAT DISSIPATION COVER**
SCHALLDICHTE WÄRMEABLEITUNGSABDECKUNG, ABDECKELEMENT UND HERSTELLUNGSVERFAHREN FÜR SCHALLDICHTE WÄRMEABLEITUNGSABDECKUNG
COUVERCLE DE DISSIPATION DE CHALEUR INSONORISÉ, ORGANE FORMANT COUVERCLE, ET PROCÉDÉ DE PRODUCTION DE COUVERCLE DE DISSIPATION DE CHALEUR INSONORISÉ

(30) Priority: 27.04.2023 JP 2023073797
(43) Date of publication of application: 12.03.2025
(73) Proprietor: Sumitomo Riko Company Limited, Komaki-shi, Aichi 485-8550 (JP)
(72) Inventor: MATSUOKA, Toshiki, Komaki-shi, Aichi 485-8550 (JP); SETO, Nobuyoshi, Komaki-shi, Aichi 485-8550 (JP); HAYAZAKI, Yusuke, Komaki-shi, Aichi 485-8550 (JP); HATANAKA, Yukio, Kani-gun, Gifu 505-0116 (JP); YABU, Akio, Kani-gun, Gifu 505-0116 (JP); MIYANAGA, Takashi, Kani-gun, Gifu 505-0116 (JP)
(74) Representative: Becker, Eberhard
(86) International application number: PCT/JP2024/016148
(87) International publication number: WO 2024/225341

(56) References cited:
- JP-A- 2010 069 742
- JP-A- 2022 090 561
- JP-A- 2023 016 623
- JP-A- 2023 016 623
- JP-A- 2023 016 802
- KR-B1- 101 268 367

## Description

### Technical Field

The disclosure relates to a soundproof heat-dissipation cover, a cover member, and a manufacturing method of a soundproof heat-dissipation cover.

### Related Art

Conventionally, it is known to attach a cover including a sound absorbing material to a vibration source such as a vehicle engine, a motor. Patent Document 1 describes a cover that covers a target object (vibration source). With the cover, sounds emitted from the target object are absorbed. Furthermore, an air layer is formed between the target object and the cover to serve as an attenuation layer. With the air layer, the sounds are further attenuated. Patent Document 2 describes an soundproof heat-dissipation engine cover which comprises a heat-dissipation contact surface and a thermal conductivity of 150 W/mK or more, and a roughness of 0,5 µm or less.

### [Prior Art Document(s)]

### [Patent Document(s)]

[Patent Document 1] Japanese Patent Application Laid-Open No. 2020-101101
[Patent Document 2] JP 2010 069742 A

### SUMMARY OF INVENTION

### Technical Problem

The target object (vibration source) such as an engine, a motor, etc., may generate heat. In such case, the heat generated from the target object may be trapped by the air layer formed between the target object and the cover, and the heat-dissipation performance of the target object may deteriorate.

The disclosure has been made in view of such background, and an objective of the invention is to provide a soundproof heat-dissipation cover according to claim 1, a cover member according to claim 7, and a manufacturing method of the soundproof heat-dissipation cover with improved heat-dissipation performance according to claim 9.

### [Means for solving the issues]

The invention relates to a soundproof heat-dissipation cover covering a target object according to claim 1. The cover includes: a heat-dissipation contact surface, having a contact part that comes into contact with the target object. A density of the soundproof heat-dissipation cover is 0.1 g/cm³ to 2.0 g/cm³. A thermal conductivity of the soundproof heat-dissipation cover is 0.1 W/mK to 2.0 W/mK. A maximum height roughness of the heat-dissipation contact surface is 50 µm to 300 µm.

The invention further relates to a cover member according to claim 7, including: the soundproof heat-dissipation cover according the first aspect and including a heat-dissipation surface on a side opposite to the heat-dissipation contact surface; and a reinforcement member, formed of a material having a higher hardness than the soundproof heat-dissipation cover, and covering the soundproof heat-dissipation cover from a side of the heat-dissipation surface of the soundproof heat-dissipation cover. The soundproof heat-dissipation cover further includes: a pair of first attachment parts, formed at positions near two ends in a first direction along the heat-dissipation contact surface, and a heat-dissipation region, formed between the pair of first attachment parts. The reinforcement member includes: a pair of second attachment parts, formed at positions near two ends in the first direction and respectively attached to the pair of first attachment parts; and a bridging part, bridging the pair of second attachment parts and having multiple through holes. The heat-dissipation contact surface is formed at a position that overlaps with at least the heat-dissipation region in a thickness direction of the soundproof heat-dissipation cover.

The invention further relates to a manufacturing method of the soundproof heat-dissipation cover according to claim 9. The manufacturing method includes: a molding process of molding the soundproof heat-dissipation cover by injecting resin into a mold having a rough surface for molding the heat-dissipation contact surface and then curing the resin. A maximum height roughness of the rough surface is 50 µm to 300 µm.

### [Inventive effects]

According to the invention, since the surface of the target object and the heat-dissipation contact surface of the soundproof heat-dissipation cover are in contact at the contact part, the heat generated from the target object is thermally conducted to the soundproof heat-dissipation cover through the contact part. Accordingly, the heat-dissipation performance of the target object is improved.

According to the invention, since the maximum height roughness of the heat-dissipation contact surface is greater than 50µm, a gap of at least 50µm is formed between the surface of the target object and the heat-dissipation contact surface of the soundproof heat-dissipation cover. With the air layer formed in the gap, compared with the case where the maximum height roughness of the heat-dissipation contact surface is less than 50 µm, the contact area between the surface of the target object and the heat-dissipation contact surface of the soundproof heat-dissipation cover can be reduced. As a result, the vibration received by the soundproof heat-dissipation cover from the surface of the target object is suppressed, and secondary radiation sounds from the soundproof heat-dissipation cover can be reduced. Thus, the soundproof performance of the target object can be improved.

Moreover, according to the invention, since the maximum height roughness of the heat-dissipation contact surface is less than 300µm, the gap formed between the surface of the target object and the heat-dissipation contact surface of the soundproof heat-dissipation cover is relatively narrow. As a result, the heat accumulation in the air layer can be suppressed, thereby suppressing the decrease in thermal conductivity from the target object to the soundproof heat-dissipation cover.

According to the invention, the soundproof heat-dissipation cover can be positioned, and the heat-dissipation performance can be improved.

According to the invention, a soundproof heat-dissipation cover with excellent heat dissipation performance can be manufactured.

It should be noted that the reference numerals in parentheses described in the claims indicate the correspondence with specific means described in the embodiments to be discussed later, and do not limit the technical scope of the disclosure.

### BRIEF DESCRIPTION OF DRAWINGS

FIG. 1 is a side view illustrating a state in which a cover member of Embodiment 1 is attached to a target object.
In FIG. 2, (a) of FIG. 2 is a front view showing a cover member of Embodiment 1, and (b) of FIG. 2 is a bottom view showing the cover member of Embodiment 1.
FIG. 3 is a side view and a partially enlarged schematic side view showing a soundproof heat-dissipation cover of Embodiment 1.
FIG. 4 is a partially enlarged cross-sectional view illustrating a state in which the cover member of Embodiment 1 is attached to the target object.
FIG. 5 is a partially enlarged schematic cross-sectional view showing a region R in FIG. 4.
FIG. 6 is a flowchart illustrating a manufacturing process of the soundproof heat-dissipation cover of Embodiment 1.
FIG. 7 is a cross-sectional view showing a state of a mold in a roughening process of Embodiment 1.
FIG. 8 is a cross-sectional view showing a state in which resin is injected into the mold in an injection process of Embodiment 1.
FIG. 9 is a cross-sectional view showing a state in which the resin is molded in a molding process of Embodiment 1.
FIG. 10 is a cross-sectional view showing a state in which the soundproof heat-dissipation cover is removed from the mold in a releasing process of Embodiment 1.
FIG. 11 is a graph showing changes in noise level with respect to the frequency applied to the block for soundproof heat-dissipation covers of Examples 1 to 4 and Comparative Examples 1 to 2.
FIG. 12 is a graph showing changes in noise level with respect to the frequency applied to the block for soundproof heat-dissipation covers of Examples 5 to 8 and Comparative Examples 3 to 4.
FIG. 13 is a graph showing changes in the average noise level in the frequency range of 4000 Hz to 10000 Hz with respect to the maximum height roughness Rz for the soundproof heat-dissipation covers of Examples 5 to 7.
FIG. 14 is a partially enlarged cross-sectional view illustrating a state in which the cover member of Embodiment 1 is attached to the target object.

### DESCRIPTION OF EMBODIMENTS

### (Embodiment 1)

### 1. Basic structure of cover member 1

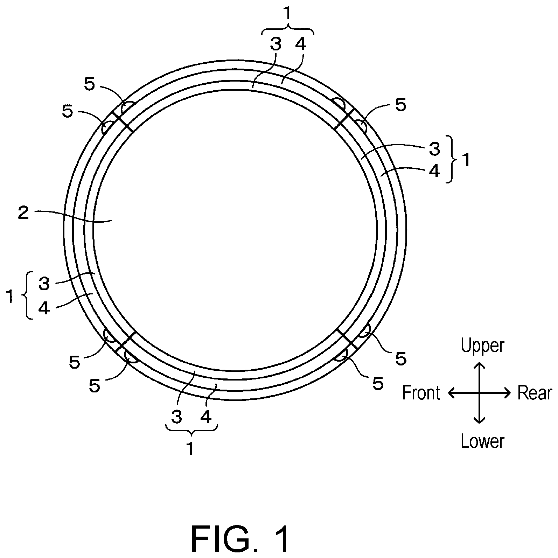

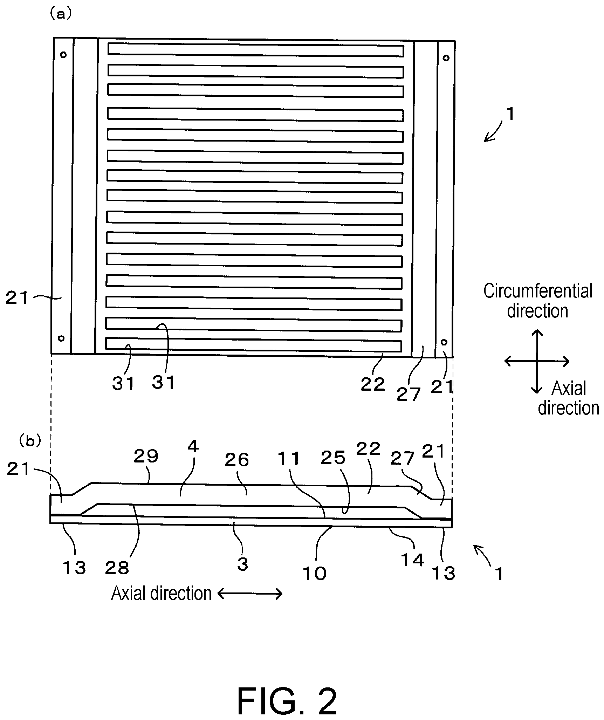

The basic structure of a cover member 1 is described with reference to FIG. 1 and FIG. 2. The cover member 1 has a function of suppressing the transmission of sounds generated by a target object 2 to the outside by covering the target object 2, as well as a function of dissipating heat from the target object 2 to the outside. The target object 2 is, for example, a power source of a vehicle. As the power source, examples may include a motor for driving a vehicle, an engine for driving a vehicle, etc.

Here, FIG. 1 illustrates the case where the target object 2 is a motor for driving a vehicle. Also, the drive motor of FIG. 1 exemplifies a case with a cylindrical outer circumferential surface. However, the outer circumferential surface of the drive motor is not limited to a cylindrical surface, and the outer circumferential surface may also be formed in an appropriately uneven shape.

In the embodiment, the drive motor is disposed so that the rotation axis of the drive motor aligns with the left-right direction of the vehicle. The left side in FIG. 1 is the front of the vehicle, and the right side is the rear of the vehicle. However, the structure may also be configured so that the drive motor is disposed with the rotation axis of the drive motor aligning with the front-rear direction of the vehicle.

The cover member 1 covers the surface of the target object 2. For example, as shown in FIG. 1, in the case where the target object 2 is a drive motor, the cover member 1 covers the outer circumferential surface of the drive motor. The cover member 1 covers the entire circumference of the outer circumferential surface of the target object 2. However, the outer circumferential surface of the target object 2 may also have a portion that is not covered. In the embodiment, four cover members 1 cover the outer circumferential surface of the target object 2. In the embodiment, the four cover members 1 cover the upper surface, the lower surface, the front surface, and the rear surface of the target object 2. However, the number of cover members 1 may also be one to three or five or more.

As shown in FIG. 2, the cover member 1 includes a soundproof heat-dissipation cover 3 and a reinforcement member 4. The soundproof heat-dissipation cover 3 is formed in a sheet-like shape by using a first sound absorbing material exhibiting sound absorption properties, and covers the surface of the target object 2. As a result, the soundproof heat-dissipation cover 3 exhibits sound absorption properties. The soundproof heat-dissipation cover 3 may be formed in advance in a shape corresponding to the surface shape of the target object 2. Alternatively, the soundproof heat-dissipation cover 3 may be formed in a sheet-like shape by using a deformable material and attached to the surface of the target object 2 while being deformed. The soundproof heat-dissipation cover 3 exhibits heat-dissipation properties in addition to sound absorption properties. The soundproof heat-dissipation cover 3 includes a heat-dissipation contact surface 10 that contacts the surface of the target object 2 and receives heat from the target object 2, and a heat-dissipation surface 11 on the side opposite to the heat-dissipation contact surface 10.

As the first sound absorbing material forming the soundproof heat-dissipation cover 3, a material with excellent sound absorption performance, for example, formed of a foamed resin may be used as appropriate. Examples of the foamed resin include urethane foam, acrylic foam, silicone foam, styrene foam, foamed olefin (foamed PP, foamed PE), foamed PVC, foamed EVA, foamed PA, etc. The Asker C hardness of the foamed resin of the soundproof heat-dissipation cover 3 is 1 to 60 degrees. The soundproof heat-dissipation cover 3 may be formed of a non-foamed resin having sound absorption properties, or may be formed of metal. Examples of non-foamed resin include polyamide resin, olefin resin, styrene resin, urethane resin, silicone resin, acrylic resin, polyvinyl chloride resin, polyethylene resin, polyethylene terephthalate resin, polycarbonate resin, polypropylene resin, ABS resin, EVA resin, carbon fiber plastics (FRP, CFRP), etc. Examples of metals include iron, aluminum, SUS, copper, and alloys thereof. However, foamed resin with excellent sound absorption properties is favorable.

Furthermore, in order for the soundproof heat-dissipation cover 3 to exhibit heat-dissipation properties, the soundproof heat-dissipation cover 3 may be formed of foamed resin including a thermal conductive material. The thermal conductive material may extend from the heat-dissipation contact surface 10 of the soundproof heat-dissipation cover 3 toward the heat-dissipation surface 11. For example, in the case where the thermal conductive material is a thermal conductive filler, the thermal conductive filler is arranged from the heat-dissipation contact surface 10 toward the heat-dissipation surface 11 of the soundproof heat-dissipation cover 3. Furthermore, the filling amount of the thermal conductive material may vary depending on the position of the soundproof heat-dissipation cover 3. For example, since the rear side of the vehicle is more difficult to cool than the front side, the filling amount of the thermal conductive material may be greater on the rear side of the vehicle than that on the front side. Here, the filling amount refers to the filling amount per unit area in the surface direction of the soundproof heat-dissipation cover 3. In addition, in the case where the thermal conductive material is a metal plate, the thermal conductive material may be insert-molded to extend from the heat-dissipation contact surface 10 toward the heat-dissipation surface 11 of the soundproof heat-dissipation cover 3.

The density of the soundproof heat-dissipation cover 3 may be 0.1 g/cm³ to 2.0 g/cm³. The density can be measured by conventional methods.

The thermal conductivity of the soundproof heat-dissipation cover 3 may be 0.1 W/mK to 2.0 W/mK, and may also be 0.5 W/mK to 0.7 W/mK. The thermal conductivity can be measured by conventional methods.

The reinforcement member 4 positions the soundproof heat-dissipation cover 3 with respect to the target object 2 in a state in which the soundproof heat-dissipation cover 3 covers from the side of the heat-dissipation surface 11. The reinforcement member 4 is formed separately from the soundproof heat-dissipation cover 3, and is disposed on the side of the heat-dissipation surface 11 of the soundproof heat-dissipation cover 3, thereby sandwiching the soundproof heat-dissipation cover 3 between the reinforcement member 4 and the target object 2.

In addition, as a method for fixing the reinforcement member 4 to the target object 2, for example, as shown in FIG. 1, the reinforcement member 4 may be fixed to the target object 2 by using a bolt 5. However, the method of fixing the reinforcement member 4 and the target object 2 is not limited to bolt fastening. For example, the structure may be so that the reinforcement member 4 is engaged with an engaging claw provided on the target object 2.

The reinforcement member 4 is formed by using a material with a hardness higher than the soundproof heat-dissipation cover 3. In the embodiment, the soundproof heat-dissipation cover 3 is formed in a sheet-like shape, for example, by using foamed resin. The Asker C hardness of the foamed resin of the reinforcement member 4 is 60 degrees to 99 degrees. In this way, in the case where the soundproof heat-dissipation cover 3 is formed of a first sound absorbing material without sufficient rigidity, the positioning effect to the target object 2 is low with only the soundproof heat-dissipation cover 3. Even in such case, the reinforcement member 4 can reliably position the soundproof heat-dissipation cover 3 with respect to the target object 2.

Furthermore, the reinforcement member 4 is formed of a material with a greater mass per unit volume (hereinafter referred to as "unit mass") than the soundproof heat-dissipation cover 3. In this way, in order for the reinforcement member 4 to be able to exert the reinforcing function, as a result, the reinforcement member 4 is formed of a material with a unit mass greater than the soundproof heat-dissipation cover 3.

The reinforcement member 4 may be also configured to be formed of a second sound absorbing material that has sound absorption performance. As the second sound absorbing material, the material may be formed by using a material with excellent sound absorption performance, such as being formed of foamed resin. However, the foamed resin applied to the reinforcement member 4 is different from the foamed resin applied to the soundproof heat-dissipation cover 3. For example, as examples of foamed resin applied to the reinforcement member 4, urethane foam, acrylic foam, silicone foam, styrene foam, foamed olefin (foamed PP, foamed PE), foamed PVC, foamed EVA, foamed PA, etc. can be applied. Even if urethane foam is applied to both of the soundproof heat-dissipation cover 3 and the reinforcement member 4, the urethane foams thereof are of different types. By forming the reinforcement member 4 by using the second sound absorbing material, the soundproof performance of the cover member 1 can be improved.

Additionally, regarding the reinforcement member 4, materials different from the second sound absorbing material, such as foamed rubber, non-foamed resin, or metal, etc., can be applied. As examples of the foamed rubber, foamed EPDM, foamed CR, foamed NBR/PVC, foamed ACM, etc., can be applied. In addition, examples of non-foamed resin include polyamide resin, olefin resin, styrene resin, urethane resin, silicone resin, acrylic resin, polyvinyl chloride resin, polyethylene resin, polyethylene terephthalate resin, polycarbonate resin, polypropylene resin, ABS resin, EVA resin, carbon fiber plastics (FRP, CFRP), etc. Examples of metals include iron, aluminum, SUS, copper, and their alloys, etc. The reinforcement member in such cases is formed of rubber, resin, or metal with higher hardness than foamed resin. However, from the viewpoint of weight reduction, foamed resin may be adopted.

In the case where the reinforcement member 4 has flexibility to the extent of being able to deform flexibly, the reinforcement member 4 can be attached to the outer circumferential surface of the target object 2 while deforming the reinforcement member 4 to conform to the shape of the outer circumferential surface of the target object 2. Also, in the case where the reinforcement member 4 is difficult to deform flexibly due to the high hardness of the reinforcement member 4, the reinforcement member 4 can be formed in advance to conform to the shape of the outer circumferential surface of the target object 2. Accordingly, the reinforcement member 4 can be easily attached to the outer circumferential surface of the target object 2.

### 2. Detailed structure of cover member 1

The detailed structure of the cover member 1 is described with reference to FIG. 1 to FIG. 5. As shown in FIG. 1, the cover member 1 is formed in a shape corresponding to the surface shape of the target object 2. However, for the ease of description, FIGs. 2 to 5 show a state in which the cover member 1 is expanded in a planar manner, and the following description will be made with reference to such figures.

As shown in (a) and (b) of FIG. 2, the cover member 1 includes the soundproof heat-dissipation cover 3 and the reinforcement member 4. The following will describe the soundproof heat-dissipation cover 3 and the reinforcement member 4 in detail. In this example, the soundproof heat-dissipation cover 3 is formed only by one sheet. The cover member 1 is formed in a substantially rectangular shape in plan view. However, the shape of the cover member 1 is not particularly limited and can be formed in any shape.

As shown in (a) and (b) of FIG. 2, although not particularly limited, in the embodiment, the soundproof heat-dissipation cover 3 is formed in a substantially rectangular shape in plan view. The soundproof heat-dissipation cover 3 is formed to be sheet-like as a whole. The soundproof heat-dissipation cover 3, in a state of being attached to the target object 2, includes a pair of first attachment parts 13 formed at positions near two ends in the axial direction (an example of the first direction) of the target object 2, and a heat-dissipation region 14 formed between the pair of first attachment parts 13. The heat-dissipation contact surface 10 of the soundproof heat-dissipation cover 3 covers and contacts a portion of the surface of the target object 2.

For the thermal conductive material included in the soundproof heat-dissipation cover 3, a metal foil such as copper, stainless steel, steel, aluminum, a metal film such as aluminum vapor-deposited film, a conductive filler, a thermally conductive resin film, etc., can be used. Also, the metal foil, the metal film, and the resin film may be laminated.

In addition, in the case where the soundproof heat-dissipation cover 3 is formed of foamed resin, the cells of the foamed resin may be in a closed cell state where the cells are closed, or in an open cell state where the cells are open. Also, it can be in a form where the closed cell state and the open cell state are present at the same time.

The reinforcement member 4 is formed in a substantially rectangular shape in plan view. The reinforcement member 4 is formed to be approximately in the same size as the soundproof heat-dissipation cover 3 in a plan view. The reinforcement member 4, in a state of being attached to the target object 2, includes a pair of second attachment parts 21 formed at positions near the two ends of the target object 2 in the axial direction, and a bridging part 22 that bridges between the pair of second attachment parts 21.

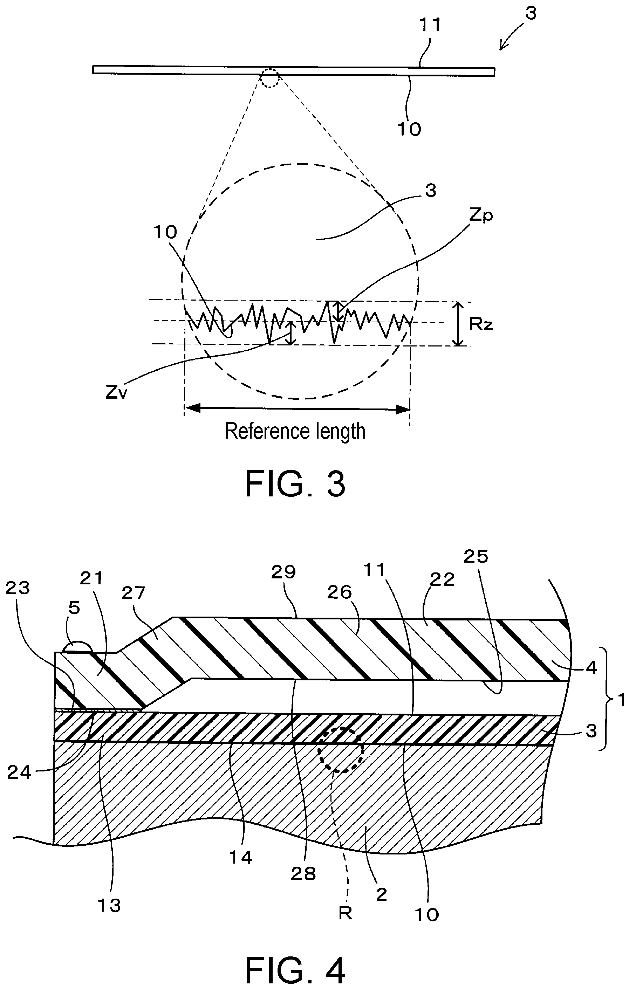

The pair of second attachment parts 21 are configured to be respectively attached to the pair of first attachment parts 13 of the soundproof heat-dissipation cover 3. The pair of second attachment parts 21 have attachment surfaces 24 (see FIG. 4) that face the pair of first attachment parts 13 and are attached to the pair of first attachment parts 13 through conventional means such as an adhesive or a double-sided tape 23. In the embodiment, the second attachment parts 21 are attached to the first attachment parts 13 by using the double-sided tape 23. In the axial direction of the target object 2, the width dimension of the pair of second attachment parts 21 is smaller than the width dimension of the pair of first attachment parts 13.

The bridging part 22 includes an accommodation concave part 25 formed in a concave shape on a surface of a side facing the soundproof heat-dissipation cover 3, in a direction away from the soundproof heat-dissipation cover 3. In a state where the second attachment parts 21 of the reinforcement member 4 are attached to the first attachment parts 13 of the soundproof heat-dissipation cover 3, the accommodation concave part 25 of the reinforcement member 4 is configured to accommodate the heat-dissipation region 14 of the soundproof heat-dissipation cover 3. The second attachment parts 21 and the bottom wall 26 of the accommodation concave part 25 are connected by an inclined wall 27 that widens towards the side of the second attachment parts 21. The bottom wall 26 of the accommodation concave part 25 has an inner surface 28 facing the soundproof heat-dissipation cover 3 and an outer surface 29 on a side opposite to the inner surface 28.

As shown in (a) of FIG. 2, the bridging part 22 includes multiple through-holes 31 that penetrate through the bridging part 22. In the embodiment, the through-holes 31 are formed to be slit-like and extending to elongate in the axial direction of the target object 2, and are formed to be arranged at intervals along the circumferential direction of the target object 2.

As shown in FIG. 4, in the state in which the cover member 1 is attached to the target object 2, the heat-dissipation contact surface 10 of the soundproof heat-dissipation cover 3 covers the surface of the target object 2. With the soundproof heat-dissipation cover 3 being pressed against the target object 2 by using the reinforcement member 4, the adhesion between the soundproof heat-dissipation cover 3 and the target object 2 is improved. Thus, the heat-dissipation performance of the cover member 1 is enhanced.

As shown in FIG. 3, the heat-dissipation contact surface 10 of the soundproof heat-dissipation cover 3 is roughened. For the convenience of explanation, in FIG. 3, the uneven shape is emphasized. Although not specifically mentioned, the uneven shape may be emphasized in other figures as well.

The heat-dissipation contact surface 10 has a maximum height roughness Rz, in accordance with JIS B0601:2013 (ISO 4287:1997, Amd.1:2009), of 50 µm to 300 µm, preferably 60 µm to 250 µm, more preferably 70 µm to 250 µm, further preferably 80 µm to 250 µm, particularly preferably 110 µm to 200 µm, and most preferably 140 µm to 160 µm.

The maximum height roughness Rz is the sum of the maximum value of a peak height Zp and the maximum value of a valley depth Zv of the profile curve in the reference length (see FIG. 3).

In the state in which the cover member 1 is attached to the target object 2, the heat-dissipation contact surface 10 of the soundproof heat-dissipation cover 3 is formed at a position that overlaps with at least the heat-dissipation region 14 in the thickness direction of the soundproof heat-dissipation cover 3. The heat-dissipation contact surface 10 may be formed in a region wider than the heat-dissipation region 14.

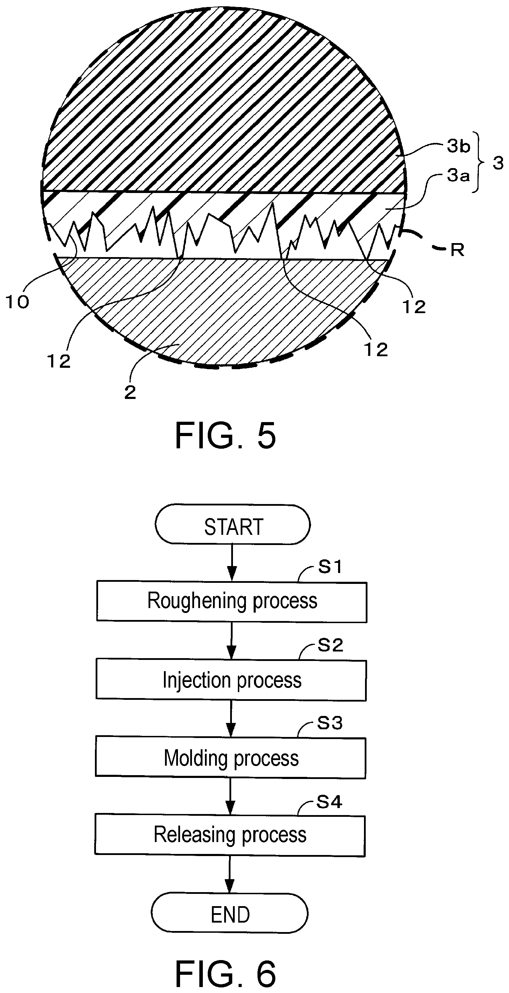

In the state in which the cover member 1 is attached to the target object 2, the heat-dissipation contact surface 10 of the soundproof heat-dissipation cover 3 is in contact with the target object 2 at the contact part 12 (see FIGs. 4 and 5). With the heat-dissipation contact surface 10 being roughened, a gap is formed between the heat-dissipation contact surface 10 of the soundproof heat-dissipation cover 3 and the surface of the target object 2. With the air layer formed in the gap, the contact area between the surface of the target object 2 and the heat-dissipation contact surface 10 of the soundproof heat-dissipation cover 3 can be reduced. As a result, the vibration received by the soundproof heat-dissipation cover 3 from the surface of the target object 2 is suppressed, and secondary radiation sounds from the soundproof heat-dissipation cover 3 can be reduced. Thus, the sound absorption performance of the soundproof heat-dissipation cover 3 is enhanced.

On the other hand, it is considered that the thermal conductivity from the target object 2 to the soundproof heat-dissipation cover 3 may decrease due to the air layer formed in the gap between the surface of the target object 2 and the heat-dissipation contact surface 10. However, as mentioned above, since the maximum height roughness of the heat-dissipation contact surface 10 is less than 300 µm, the decrease in thermal conductivity is suppressed.

FIG. 5 shows a partially enlarged cross-sectional view of the heat-dissipation contact surface 10, in which a region R in FIG. 4 is enlarged. The soundproof heat-dissipation cover 3 includes, in an order from the side of the heat-dissipation contact surface 10, a skin layer 3a and a foam layer 3b. The skin layer 3a is formed through rapid cooling by contacting a mold 40 when the soundproof heat-dissipation cover 3 is molded. In the skin layer 3a, the first sound absorbing material is not foamed. Therefore, the heat transfer performance of the skin layer 3a is higher than that of the foam layer 3b.

Although not shown in detail, the skin layer 3a is also formed on the side of the heat-dissipation surface 11 of the soundproof heat-dissipation cover 3. In other words, the soundproof heat-dissipation cover 3 has a structure in which the foam layer 3b is sandwiched between the skin layer 3a on the side of the heat-dissipation surface 11 and the skin layer 3a on the side of the heat-dissipation contact surface 10.

### 3. Manufacturing method of the soundproof heat-dissipation cover 3

Next, referring to FIGs. 6 to 10, an example of a manufacturing method of the soundproof heat-dissipation cover 3 will be described. However, the manufacturing method of the soundproof heat-dissipation cover 3 is not limited to the following explanation.

FIG. 6 shows a flowchart of a manufacturing process of the soundproof heat-dissipation cover 3. The manufacturing process according to the embodiment includes a roughening process (S1), an injection process (S2), a molding process (S3), and a releasing process (S4).

Firstly, the mold 40 for molding the soundproof heat-dissipation cover 3 is prepared. The mold 40 may be made of metal or resin.

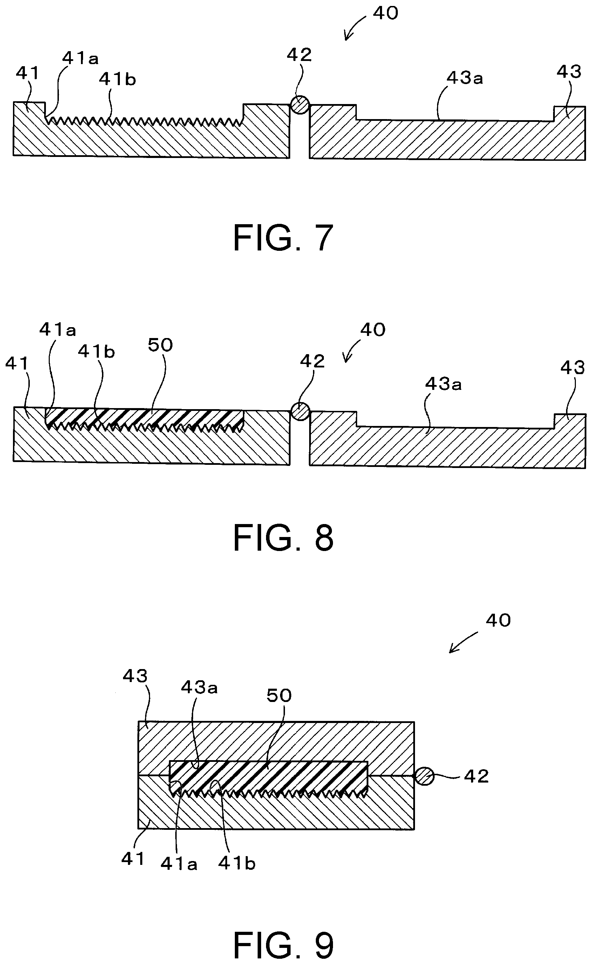

As shown in FIG. 7, the mold 40 includes a lower mold 41 and an upper mold 43 connected to the lower mold 41 via a hinge 42. In the embodiment, the lower mold 41 and the upper mold 43 are formed in the same shape. The upper mold 43 is configured to be rotatable around the hinge 42 as an axis. By rotating the upper mold 43, the upper mold 43 is configured to be overlaid on top of the lower mold 41. However, the lower mold 41 and the upper mold 43 may be formed in different shapes. Also, the hinge 42 may be omitted.

On the upper surface of the lower mold 41, a lower concave part 41a that is recessed downward is formed. In the state in which the upper mold 43 is overlaid on the lower mold 41, an upper concave part 43a that is recessed upward is formed on the lower surface of the upper mold 43. The soundproof heat-dissipation cover 3 is molded by filling and curing resin in the cavity formed by the lower concave part 41a of the lower mold 41 and the upper concave part 43a of the upper mold 43.

In the embodiment, the bottom surface of the lower concave part 41a of the lower mold 41 is arranged as a rough surface 41b forming the heat-dissipation contact surface 10 of the soundproof heat-dissipation cover 3. However, it may also be that the ceiling surface of the upper concave part 43a of the upper mold 43 is arranged as the rough surface 41b.

The rough surface 41b has a maximum height roughness Rz, in accordance with JIS B0601:2013 (ISO 4287:1997, Amd.1:2009), of 50 µm to 300 µm, preferably 60 µm to 250 µm, more preferably 70 µm to 250 µm, further preferably 80 µm to 250 µm, particularly preferably 110 µm to 200 µm, and most preferably 140 µm to 160 µm.

In the embodiment, as shown in FIG. 6, a roughening process is performed to roughen the bottom surface of the lower concave part 41a of the lower mold 41 (S1). For the roughening process, various processes, such as blast processing, embossing process, etc., can be adopted. However, in the case where the mold 40 with the rough surface 41b formed in advance is used, the roughening process may be omitted.

Blast processing is a machining process that carries out abrasive processing by spraying onto the target object an abrasive mixed with compressed gas. The abrasive is not particularly limited, and can be appropriately selected from, for example, metal-based abrasives (alumina, steel shot, steel grid, reduced iron powder, etc.), plastic-based abrasives (polyplus, polyextra, nylon, etc.), and plant-based abrasives (walnut, peach, corn, etc., ).

Embossing processing is a machining process that forms a wrinkle pattern by etching or laser machining the surface of the mold 40. For example, a film with a pre-formed etching pattern is attached to the surface of the mold 40 formed of metal, and the pattern is transferred to the surface of the mold 40 by etching with chemicals. By molding the resin using the mold 40 with the pattern transferred in this way, the pattern of the surface of the mold 40 is transferred to the resin. Alternatively, a pattern is formed on the surface of the mold 40 by irradiating laser light onto the surface of the mold 40 made of metal or resin to cut the surface.

After forming the rough surface 41b on the mold 40, the injection process is performed (S2). As shown in FIG. 8, in the injection process (S2), the upper mold 43 is opened by using the hinge 42 as an axis, and a predetermined amount of liquid resin 50 is injected into the lower concave part 41a of the lower mold 41. The amount of the resin 50 injected into the lower concave part 41a can be appropriately adjusted according to the foaming rate. The resin 50 may include a thermal conductive material or be configured without including a thermal conductive material.

Subsequently, the molding process is executed (S3). As shown in FIG. 9, the upper mold 43 is rotated around the hinge 42 as an axis and overlapped with the lower mold 41. Afterwards, by heating the mold 40 to a predetermined temperature, the foaming agent mixed in the resin 50 foams and the resin 50 in the liquid state is cured. Thus, in the molding process (S3), the foaming process of the resin 50 and the curing process of the resin 50 are executed. As a result, foamed resin is formed. At this time, corresponding to the shape of the rough surface 41b formed on the lower concave part 41a of the lower mold 41, the surface of the resin 50 is roughened.

The resin 50 expands by foaming and is filled into the cavity formed by the lower concave part 41a and the upper concave part 43a.

When the resin 50 comes into contact with the inner surface of the cavity, the resin 50 is rapidly cooled and becomes cured before foaming. As a result, the skin layer 3a without a void is formed in a portion contacting the inner surface of the cavity in the resin 50. After the skin layer 3a is formed, the resin inner of the skin layer 3a is cured more slowly than the skin layer 3a, so the foaming by the foaming agent progresses, and the foam layer 3b is formed.

As described above, the skin layer 3a is formed in a region where the resin 50 comes into contact with the inner surface of the cavity. Therefore, among the soundproof heat-dissipation cover 3, the skin layer 3a is formed in the portion that comes into contact with the rough surface 41b of the lower mold 41, and, among the skin layer 3a, the heat-dissipation contact surface 10 exhibiting the predetermined maximum height roughness Rz is formed in the portion that comes into contact with the rough surface 41b on the lower side.

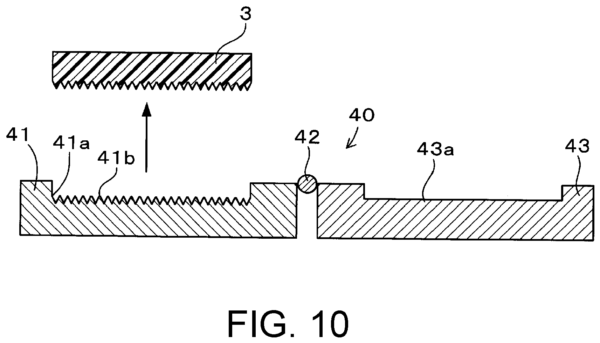

Next, the releasing process is performed (S4). As shown in FIG. 10, after the resin is cured, the upper mold 43 is rotated around the hinge 42 as an axis to be opened, and the resin is removed from the lower mold 41. Accordingly, the soundproof heat-dissipation cover 3 is completed.

### 4. Examples and Comparative Examples

The following describes examples of the disclosure and Comparative Examples.

### 4.1 Blast processing

### (Example 1)

In Example 1, a metal mold 40 was used. The metal used for the mold 40 is not particularly limited, and any metal such as aluminum, aluminum alloy, etc., can be used. In Example 1, the mold 40 made of aluminum was used. The bottom surface of the lower concave part 41a of the lower mold 41 was subjected to blast processing by using alumina (grain size 36) as an abrasive. As a result, the rough surface 41b with the maximum height roughness Rz of 48 µm was formed on the bottom surface of the lower concave part 41a of the lower mold 41. However, the grain size complied with JIS R 6001-1:2017 (ISO 8486-1).

Resin containing a thermal conductive material was injected into the aluminum lower mold 41 on which the rough surface 41b was formed, and then the resin was solidified and foamed. Accordingly, the soundproof heat-dissipation cover 3 according to Example 1 was manufactured. The thickness of the soundproof heat-dissipation cover 3 was 5 mm. The maximum height roughness Rz of the heat-dissipation contact surface 10 of Example 1 was 105 µm.

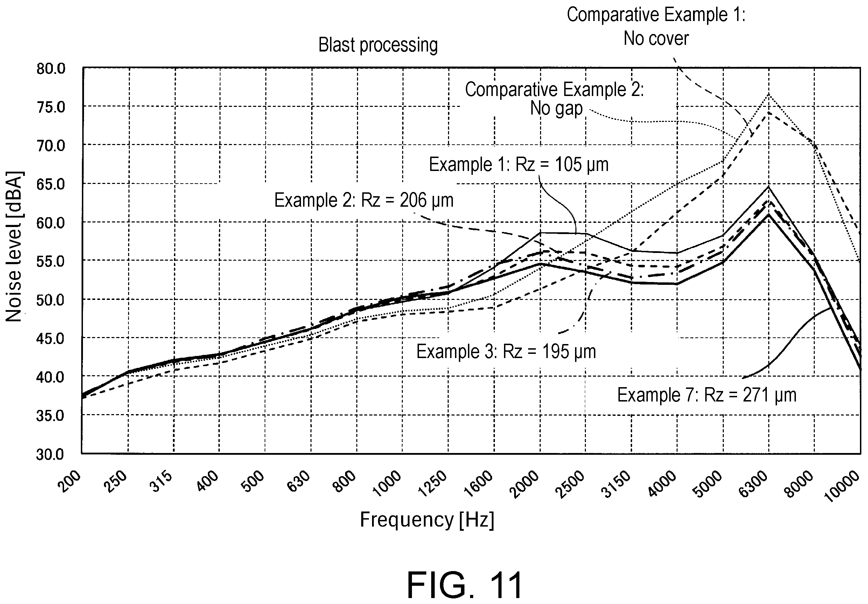

The soundproof heat-dissipation cover 3 of Example 1 was disposed so that the heat-dissipation contact surface 10 was in contact with the upper surface of an aluminum block, and the soundproof heat-dissipation cover 3 was fixed to the block. The vibration at a predetermined frequency was applied to the block in the state in which the soundproof heat-dissipation cover 3 was fixed, and the sound leaked from the soundproof heat-dissipation cover 3 was detected by a microphone placed above the soundproof heat-dissipation cover 3. The results are shown in FIG. 11.

### (Example 2)

Next, the soundproof heat-dissipation cover 3 according to Example 2 was produced in the same manner as in Example 1, except that the mold 40 made of aluminum was used and silicon carbide (grain size 12) was used as the abrasive. The maximum height roughness Rz of the bottom surface of the lower concave part 41a of the lower mold 41 in Example 2 was 82 µm. In addition, the maximum height roughness Rz of the heat-dissipation contact surface 10 of the soundproof heat-dissipation cover 3 in Example 2 was 206 µm.

The experiment on the soundproof performance of the soundproof heat-dissipation cover 3 of Example 2 was conducted in the same manner as in Example 1. The results are shown in FIG. 11.

### (Example 3)

Next, the soundproof heat-dissipation cover 3 according to Example 3 was produced in the same manner as in Example 1, except that the mold 40 made of aluminum was used and alumina (grain size 16) with a smaller grain size than that in Example 1 was used as the abrasive. The maximum height roughness Rz of the bottom surface of the lower concave part 41a of the lower mold 41 in Example 3 was 69 µm. In addition, the maximum height roughness Rz of the heat-dissipation contact surface 10 of the soundproof heat-dissipation cover 3 in Example 3 was 195 µm.

The experiment on the soundproof performance of the soundproof heat-dissipation cover 3 of Example 3 was conducted in the same manner as in Example 1. The results are shown in FIG. 11.

### (Example 4)

Next, the soundproof heat-dissipation cover 4 according to Example 3 was produced in the same manner as in Example 1, except that the mold 40 made of aluminum was used and alumina (grain size 8) with a smaller grain size than that in Example 3 was used as the abrasive. The maximum height roughness Rz of the bottom surface of the lower concave part 41a of the lower mold 41 in Example 4 was 78 µm. In addition, the maximum height roughness Rz of the heat-dissipation contact surface 10 of the soundproof heat-dissipation cover 3 in Example 4 was 271 µm.

The experiment on the soundproof performance of the soundproof heat-dissipation cover 3 of Example 3 was conducted in the same manner as in Example 1. The results are shown in FIG. 11.

### (Comparative Example 1)

As Comparative Example 1, the vibrations at a predetermined frequency were applied to an aluminum block, and the sound generated from the block was detected by a microphone disposed above the block. The results are shown in FIG. 11.

### (Comparative Example 2)

As Comparative Example 2, the soundproof heat-dissipation cover 3 in which the heat-dissipation contact surface 10 was not roughened was produced. Specifically, the soundproof heat-dissipation cover 3 according to Comparative Example 2 was produced by using the metal mold 40 in which the inner surface of the lower concave part 41a of the lower mold 41 and the inner surface of the upper concave part 43a of the upper mold 43 were mirror-finished. The thickness of the soundproof heat-dissipation cover 3 was 5 mm.

The experiment on the soundproof performance of the soundproof heat-dissipation cover 3 of Comparative Example 2 was conducted in the same manner as in Example 1. The results are shown in FIG. 11.

### (Results and discussion)

FIG. 11 is a graph showing a frequency analysis on the noise level generated when white noise vibration was applied to the block by using an exciter (Type 4808) manufactured by HBK. When the white noise vibration within the frequency range of 200 Hz to 10000 Hz was applied, the noise levels of Examples 1 to 4 and Comparative Examples 1 to 2 formed a mountain-like shape with a peak at 6300 Hz.

From 200 Hz to 1250 Hz, there was no significant difference in the noise levels among Examples 1 to 4 and Comparative Examples 1 and 2. Above 1250 Hz, the differences in noise level began to appear.

For Examples 1 to 4, the noise level decreased in the frequency range of 2000 Hz to 4000 Hz. Meanwhile, for Comparative Examples 1 and 2, the noise level increased in the frequency range of 2000 Hz to 4000 Hz. As a result, in the frequency region above 3150 Hz, Examples 1 to 4 showed lower noise levels than the noise levels of Comparative Examples 1 and 2.

In Examples 1 to 4, it was found that the noise level decreased as the maximum height roughness Rz of the heat-dissipation contact surface 10 increased.

The maximum height roughnesses Rz of the heat-dissipation contact surface 10 of the soundproof heat-dissipation cover 3 related to Examples 1 to 4 were formed to be 105 µm to 271 µm. As a result, a gap was formed between the heat-dissipation contact surface 10 of the soundproof heat-dissipation cover 3 and the surface of the block. It is considered that, with the air layer formed in the gap, the contact area between the surface of the block and the heat-dissipation contact surface 10 of the soundproof heat-dissipation cover 3 can be reduced, and the soundproof performance of the soundproof heat-dissipation cover 3 is improved because the vibration received by the soundproof heat-dissipation cover 3 from the surface of the block is suppressed, and the secondary radiation sound from the soundproof heat-dissipation cover 3 can be suppressed.

### 4.2 Embossing processing

### (Example 5)

In Example 5 the mold 40 made of metal was used. Embossing processing was applied to the bottom surface of the lower concave part 41a of the lower mold 41. The rough surface 41b with the maximum height roughness Rz of 50 µm was formed on the bottom surface of the lower concave part 41a of the lower mold 41.

By using the mold 40 in which the rough surface 41b was formed, the soundproof heat-dissipation cover 3 was created like in Example 1. The thickness of the soundproof heat-dissipation cover 3 was 5 mm. The maximum height roughness Rz of the heat-dissipation contact surface 10 of Example 5 was 94 µm.

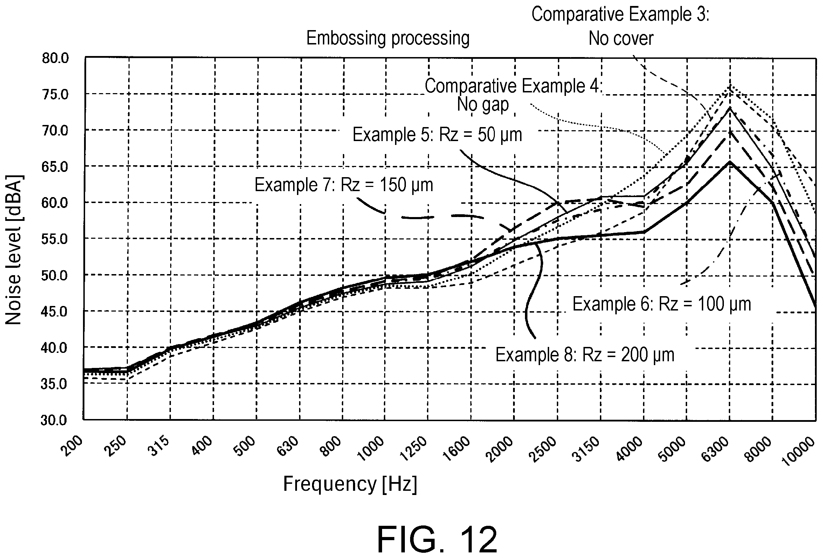

The inspection on the soundproof performance of the soundproof heat-dissipation cover 3 of Example 5 was conducted in the same manner as in Example 1. The results are shown in FIG. 12. In FIG. 12, for the ease of description, the maximum height roughness Rz of the heat-dissipation contact surface 10 of Example 5 is displayed as 50 µm, based on the maximum height roughness Rz of the mold.

### (Example 6)

Next, embossing processing was applied to the bottom surface of the lower concave part 41a of the lower mold 41 under a different condition from Example 5. The rough surface 41b with the maximum height roughness Rz of 107 µm was formed on the bottom surface of the lower concave part 41a of the lower mold 41.

By using the mold 40 in which the rough surface 41b was formed, the soundproof heat-dissipation cover 3 was created like in Example 1. The thickness of the soundproof heat-dissipation cover 3 was 5 mm. The maximum height roughness Rz of the heat-dissipation contact surface 10 of Example 6 was 141 µm.

The inspection on the soundproof performance of the soundproof heat-dissipation cover 3 of Example 6 was conducted in the same manner as in Example 1. The results are shown in FIG. 12. In FIG. 12, for the ease of description, the maximum height roughness Rz of the heat-dissipation contact surface 10 of Example 6 is displayed as 100 µm, based on the maximum height roughness Rz of the mold.

### (Example 7)

Next, embossing processing was applied to the bottom surface of the lower concave part 41a of the lower mold 41 under a different condition from Example 5. The rough surface 41b with the maximum height roughness Rz of 158 µm was formed on the bottom surface of the lower concave part 41a of the lower mold 41.

By using the mold 40 in which the rough surface 41b was formed, the soundproof heat-dissipation cover 3 was created like in Example 1. The thickness of the soundproof heat-dissipation cover 3 was 5 mm. The maximum height roughness Rz of the heat-dissipation contact surface 10 of Example 7 was 182 µm.

The inspection on the soundproof performance of the soundproof heat-dissipation cover 3 of Example 7 was conducted in the same manner as in Example 1. The results are shown in FIG. 12. In FIG. 12, for the ease of description, the maximum height roughness Rz of the heat-dissipation contact surface 10 of Example 7 is displayed as 150 µm, based on the maximum height roughness Rz of the mold.

### (Example 8)

Next, embossing processing was applied to the bottom surface of the lower concave part 41a of the lower mold 41 under a different condition from Example 5. The rough surface 41b with the maximum height roughness Rz of 204 µm was formed on the bottom surface of the lower concave part 41a of the lower mold 41.

By using the mold 40 in which the rough surface 41b was formed, the soundproof heat-dissipation cover 3 was created like in Example 1. The thickness of the soundproof heat-dissipation cover 3 was 5 mm. The maximum height roughness Rz of the heat-dissipation contact surface 10 of Example 8 was 203 µm.

The inspection on the soundproof performance of the soundproof heat-dissipation cover 3 of Example 8 was conducted in the same manner as in Example 1. The results are shown in FIG. 12. In FIG. 12, for the ease of description, the maximum height roughness Rz of the heat-dissipation contact surface 10 of Example 8 is displayed as 200 µm, based on the maximum height roughness Rz of the mold.

### (Comparative Example 3)

As Comparative Example 3, the vibrations at a predetermined frequency were applied to an aluminum block, and the sound generated from the block was detected by a microphone disposed above the block. The results are shown in FIG. 12.

### (Comparative Example 4)

As Comparative Example 4, the soundproof heat-dissipation cover 3 in which the heat-dissipation contact surface 10 was not roughened was produced. Specifically, the soundproof heat-dissipation cover 3 according to Comparative Example 4 was produced by using the metal mold 40 in which the inner surface of the lower concave part 41a of the lower mold 41 and the inner surface of the upper concave part 43a of the upper mold 43 were mirror-finished. The thickness of the soundproof heat-dissipation cover 3 was 5 mm.

The experiment on the soundproof performance of the soundproof heat-dissipation cover 3 of Comparative Example 4 was conducted in the same manner as in Example 1. The results are shown in FIG. 12.

### (Results and discussion)

The difference between the maximum height roughness Rz of the mold 40 and the maximum height roughness Rz of the soundproof heat-dissipation cover 3

For Examples 5 to 8, the maximum height roughness Rz of the heat-dissipation contact surface 10 of the soundproof heat-dissipation cover 3 was larger than the maximum height roughness Rz of the rough surface 41b of the mold 40. This may be because the rough surface 41b formed on the mold 40 by performing embossing processing was created by etching, resulting in a sharp edge. Additionally, as the etching was performed by using liquid chemicals, the uneven shape became complex, and an overhanging structure may also be formed. Therefore, it is considered that the molded soundproof heat-dissipation cover 3 may be cut by a sharply formed edge portion, or a portion formed in an overhanging shape may remain stuck in the mold 40 and be peeled off. Consequently, it is considered that the maximum height roughness Rz of the heat-dissipation contact surface 10 of the soundproof heat-dissipation cover 3 exceeds the maximum height roughness Rz of the rough surface 41b of the mold 40. For Example 8, the maximum height roughness Rz of the rough surface 41b of the mold 40 and the maximum height roughness Rz of the heat-dissipation contact surface 10 of the soundproof heat-dissipation cover 3 were approximately equivalent.

### (2) Noise level

FIG. 12 is a graph showing a frequency analysis on the noise level generated when white noise vibration was applied to the block by using an exciter (Type 4808) manufactured by HBK. When the white noise vibration within the frequency range of 200 Hz to 10000 Hz was applied, the noise levels of Examples 5 to 8 and Comparative Examples 3 to 4 formed a mountain-like shape with a peak at 6300 Hz.

From 200 Hz to 1600 Hz, there was no significant difference in the noise levels among Examples 5 to 8 and Comparative Examples 3 and 4. When the frequency was above 1600 Hz, a difference in noise level began to appear among Examples 5 to 8 and Comparative Examples 3 to 4. When the frequency was above 4000 Hz, the noise levels of Examples 5 to 8 and Comparative Examples 3 to 4 increased significantly, and a large difference in noise level occurred.

Comparative Example 3 without the soundproof heat-dissipation cover 3 showed a rapid increase in noise level when the frequency exceeded 4000 Hz. The noise level was the second highest when the frequency was at 5,000 Hz to 8,000 Hz, and the highest at 10,000 Hz.

The noise level of Comparative Example 4, which includes the soundproof heat-dissipation cover 3 without embossing, was the highest in the range of 4000 Hz to 8000 Hz. This is considered to be because, by not embossing, the cover resonates and the noise level does not increase significantly.

For Examples 5 to 8, the noise levels were lower than those of Comparative Examples 3 and 4 in the range of 5000 Hz to 10000 Hz.

In the range of 4000 Hz to 10000 Hz, the noise levels of Example 5 and Example 6 were substantially the same. Example 7, which had the maximum height roughness Rz greater than Example 5 and Example 6, showed a noise level lower than Example 5 and Example 6. The noise level of Example 8, which had an even larger maximum height roughness Rz, was the lowest. In this way, in general, the soundproof heat-dissipation cover 3 with a larger maximum height roughness Rz tends to have a lower noise level.

The maximum height roughness Rz of the heat-dissipation contact surface 10 of the soundproof heat-dissipation cover 3 was 94 µm for Example 5, 141 µm for Example 6, 182 µm for Example 7, and 203 µm for Example 8. As a result, a gap was formed between the heat-dissipation contact surface 10 of the soundproof heat-dissipation cover 3 and the surface of the block. It is considered that, with the air layer formed in the gap, the contact area between the surface of the block and the heat-dissipation contact surface 10 of the soundproof heat-dissipation cover 3 can be reduced, and the soundproof performance of the soundproof heat-dissipation cover 3 is improved because the vibration received by the soundproof heat-dissipation cover 3 from the surface of the block is suppressed, and the secondary radiation sound from the soundproof heat-dissipation cover 3 can be suppressed.

Comparing the noise levels of Examples 5 to 8 in the frequency range of 4000 Hz to 10000 Hz, it can be observed that, in general, as the maximum height roughness Rz increased, the noise level decreased. This is considered to be due to the improved absorption of sounds from the block, as a larger gap between the heat-dissipation contact surface 10 and the surface of the block can reduce the contact area between the surface of the block and the heat-dissipation contact surface 10 of the soundproof heat-dissipation cover 3, and the vibration received by the soundproof heat-dissipation cover 3 from the surface of the block is suppressed, and the secondary radiation sound from the soundproof heat-dissipation cover 3 can be suppressed.

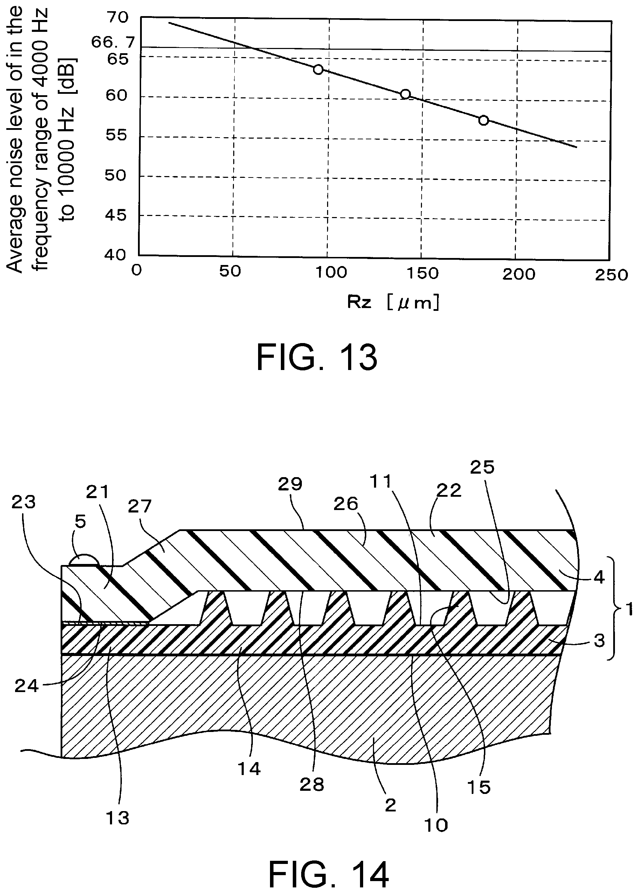

The above points are described with reference to FIG. 13. FIG. 13 is a graph showing changes of the averages of the noise level in the frequency range of 4000 Hz to 10000 Hz with respect to the maximum height roughness Rz in the noise level test. The three data points in the figure correspond to Examples 5 to 7.

As indicated in FIG. 13, as the maximum height roughness Rz increased, the average noise level decreased. In other words, it can be seen that as the maximum height roughness Rz increased, the soundproof effect improved.

In FIG. 13, a line indicating an average noise level of 66.7 [dB] is shown. The value represents the average noise level of Comparative Example 3 in the frequency range of 4000 Hz to 10000 Hz. It is found that Examples 5 to 7 exhibited a higher soundproofing effect than the average noise level of Comparative Example 3.

### 4.3 Heat-dissipation performance

### (Example 9)

The soundproof heat-dissipation cover 3 related to Example 9 was created in the same manner as Example 1, except for using the mold 40 made of aluminum and using alumina as an abrasive. The maximum height roughness Rz of the heat-dissipation contact surface 10 of the soundproof heat-dissipation cover 3 in Example 9 was 150 µm.

A block to which the soundproof heat-dissipation cover 3 related to Example 9 was attached was heated with a heat source at 100°C, and heating was continued until the temperature of the surface of the soundproof heat-dissipation cover 3 became constant. The temperature of the surface of the soundproof heat-dissipation cover 3 related to Example 9 was 93.80°C.

### (Comparative Examples 1 to 2)

The blocks to which the soundproof heat-dissipation covers 3 related to Comparative Examples 1 and 2 were attached were heated with a heat source at 100°C, and heating was continued until the temperature of the surface of the soundproof heat-dissipation cover 3 became constant. The temperature of the soundproof heat-dissipation cover 3 related to Comparative Example 1 was 98.40°C. The temperature of the surface of the soundproof heat-dissipation cover 3 related to Comparative Example 2 was 92.20°C.

### (Results and discussion)

According to the results of the heat-dissipation test, Example 9 was 93.80°C, while Comparative Example 1 was 98.40°C. This can be considered to be due to the efficient dissipation of heat from the block to the outside by the soundproof heat-dissipation cover 3.

On the other hand, the result of Comparative Example 2 was 92.20°C. It is considered to be due to that the heat-dissipation contact surface 10 of the soundproof heat-dissipation cover 3 of Comparative Example 2 was not roughened, resulting in high adhesion to the surface of the block, and thus heat was quickly conducted from the block to the soundproof heat-dissipation cover 3. However, as mentioned above, the noise level of Comparative Example 2 was almost the same as that of Comparative Example 1 and therefore not desirable.

Instead, the result of Example 9 at 93.80°C can be considered to have substantially the same level of heat-dissipation performance as Comparative Example 2 in which roughening was not performed.

### 5. Effects of the Embodiment

Next, the effects of the embodiment will be described. The embodiment includes the soundproof heat-dissipation cover 3 that covers the target object 2, and includes the heat-dissipation contact surface 10 having the contact part 12 that contacts the target object 2. The density is 0.1 g/cm³ to 2.0 g/cm³, the thermal conductivity is 0.1 W/m to 2.0 W/mK, and the maximum height roughness Rz of the heat-dissipation contact surface 10 is 50 µm to 300 µm.

According to the embodiment, since the surface of the target object 2 and the heat-dissipation contact surface 10 of the soundproof heat-dissipation cover 3 are in contact at the contact part 12, the heat generated from the target object 2 is thermally conducted to the soundproof heat-dissipation cover 3 through the contact part 12. Accordingly, the heat-dissipation performance of the target object 2 is improved.

According to the embodiment, since the maximum height roughness Rz of the heat-dissipation contact surface 10 is greater than 50µm, a gap of at least 50µm is formed between the surface of the target object 2 and the heat-dissipation contact surface 10 of the soundproof heat-dissipation cover 3. With the air layer formed in the gap, the contact area between the surface of the target object 2 and the heat-dissipation contact surface 10 of the soundproof heat-dissipation cover 3 can be reduced, the vibration received by the soundproof heat-dissipation cover 3 from the surface of the target object 2 can be suppressed, and the secondary radiation sound from the soundproof heat-dissipation cover 3 can be suppressed. Accordingly, the soundproof performance of the target object 2 can be improved.

Moreover, according to the embodiment, since the maximum height roughness Rz of the heat-dissipation contact surface 10 is less than 300µm, the gap formed between the surface of the target object 2 and the heat-dissipation contact surface 10 of the soundproof heat-dissipation cover 3 is relatively narrow. As a result, the heat accumulation in the air layer can be suppressed, thereby suppressing the decrease in thermal conductivity from the target object 2 to the soundproof heat-dissipation cover 3.

The maximum height roughness Rz of the heat-dissipation contact surface 10 related to the embodiment is preferably 60 µm to 250 µm, and more preferably 110 µm to 200µm.

According to the embodiment, since the maximum height roughness Rz of the heat-dissipation contact surface 10 is greater than 110µm, the contact area between the surface of the target object 2 and the heat-dissipation contact surface 10 of the soundproof heat-dissipation cover 3 can be further reduced, the vibration received by the soundproof heat-dissipation cover 3 from the surface of the target object 2 is suppressed, and the secondary radiation sound from the soundproof heat-dissipation cover 3 can be suppressed. Thus, the soundproof performance of the target object 2 can be improved.

Moreover, according to the embodiment, since the maximum height roughness Rz of the heat-dissipation contact surface 10 is less than 200µm, the decrease in thermal conductivity from the target object 2 to the soundproof heat-dissipation cover 3 can be further suppressed.

According to the embodiment, the soundproof heat-dissipation cover 3 is formed in a sheet-like shape using foamed resin, and further includes the foam layer 3b having bubbles, and the skin layer 3a formed outward in the thickness direction relative to the foam layer 3b and having fewer bubbles than the foam layer 3b. The heat-dissipation contact surface 10 is formed on the skin layer 3a.

According to the embodiment, since the skin layer 3a has relatively fewer bubbles, it has higher thermal conductivity compared to the foam layer 3b. As the skin layer 3a with high thermal conductivity is in contact with the target object 2, the thermal conductivity from the target object 2 to the soundproof heat-dissipation cover 3 can be improved.

According to the embodiment, the soundproof heat-dissipation cover 3 is formed in a sheet-like shape, and the soundproof heat-dissipation cover 3 further includes a thermal conductive material, which extends along the thickness direction.

According to the embodiment, the thermal conductivity of the soundproof heat-dissipation cover 3 can be improved.

In the embodiment, the thermal conductivity of the soundproof heat-dissipation cover 3 is preferably 0.5 to 0.7 W/mK. According to the embodiment, the thermal conductivity of the soundproof heat-dissipation cover 3 can be further improved.

The cover member 1 of the embodiment includes the soundproof heat-dissipation cover 3 that further includes the heat-dissipation surface on the side opposite to the heat-dissipation contact surface 10, and the reinforcement member 4 formed of a material having a higher hardness than the soundproof heat-dissipation cover 3 and covering the soundproof heat-dissipation cover 3 from the side of the heat-dissipation surface of the soundproof heat-dissipation cover 3. The soundproof heat-dissipation cover 3 further includes: the pair of first attachment parts 13, formed at the positions near two ends in the first direction along the heat-dissipation contact surface 10; and the heat-dissipation region 14, formed between the pair of first attachment parts 13. The reinforcement member 4 includes: the pair of second attachment parts 21 formed at the positions near two ends in the first direction and respectively attached to the pair of first attachment parts 13; and the bridging part 22, bridging the pair of second attachment parts 21 and having multiple through holes 31. The heat-dissipation contact surface 10 is formed at a position that overlaps with at least the heat-dissipation region 14 in the thickness direction of the soundproof heat-dissipation cover 3.

According to the embodiment, the soundproof heat-dissipation cover 3 can be positioned, and the heat-dissipation performance can be improved.

The manufacturing method of the soundproof heat-dissipation cover 3 according to the embodiment includes the molding process of molding the soundproof heat-dissipation cover 3 by injecting resin into the mold 40 having the rough surface 41b for molding and then curing the heat-dissipation contact surface 10, and the maximum height roughness Rz of the rough surface 41b is 50 µm to 300 µm.

By setting the maximum height roughness Rz of the rough surface 41b of the mold 40 to 50 µm to 300 µm, the maximum height roughness of the heat-dissipation contact surface 10 of the soundproof heat-dissipation cover 3 can be formed to correspond to the maximum height roughness Rz of the rough surface 41b. It should be noted that "correspond" includes cases of being the same as well as the cases where, although the maximum height roughnesses are different, there is some kind of relationship between the maximum height roughness of the rough surface 41b and the maximum height roughness Rz of the heat-dissipation contact surface 10 of the soundproof heat-dissipation cover 3.

According to the embodiment, in the molding process, it may also be configured that the shape of the rough surface 41b of the mold 40 is transferred to the heat-dissipation contact surface 10 of the soundproof heat-dissipation cover 3. Additionally, according to the embodiment, in the molding process, it may also be configured that the maximum height roughness Rz of the heat-dissipation contact surface 10 of the soundproof heat-dissipation cover 3 is formed to be larger than the maximum height roughness Rz of the rough surface 41b of the mold 40.

According to the embodiment, the manufacturing method of the soundproof heat-dissipation cover 3 may include the roughening process that roughens at least a portion of the inner surface of the mold 40.

In the roughening process, at least a portion of the inner surface of the mold 40 may be roughened by blast processing. Additionally, in the roughening process, at least a portion of the inner surface of the metal or resin mold 40 may be roughened by embossing processing.

In the embodiment, a foaming process for foaming the resin 50 may be executed in the molding process.

In the embodiment, it may also be configured that the resin 50 molded in the molding process includes a thermal conductive material.

### (Embodiment 2)

Next, referring to FIG. 14, Embodiment 2 will be described. As shown in FIG. 14, the soundproof heat-dissipation cover 3 related to the embodiment has multiple strips 15 on the heat-dissipation surface 11 of the heat-dissipation region 14. The strips 15 are formed to protrude outward. The strips 15 are formed to extend in the surface direction of the soundproof heat-dissipation cover 3. Specifically, in the state in which the soundproof heat-dissipation cover 3 is attached to the target object 2, the strips 15 are formed to extend linearly along the circumferential direction of the outer circumferential surface of the target object 2. The strips 15 are arranged at intervals in the axial direction of the target object 2 on the heat-dissipation surface 11 of the heat-dissipation region 14. In the embodiment, the strips 15 are formed to be arranged at equal intervals. However, the shape of the multiple strips 15 may be wavy when viewed as a plan view. Additionally, the strips 15 may be formed to extend in the axial direction of the outer circumferential surface of the target object 2, or may be formed in a shape extending in a direction inclined with respect to the circumferential direction and the axial direction of the outer circumferential surface of the target object 2.

The thermal conductive material may also extend continuously in the extending direction of the strip 15 at the tip side of the strip 15. As a result, by continuously arranging the thermal conductive material in the range from an end side to the other end side in the extending direction of the strip 15, a high heat-dissipation performance can be exhibited even in the surface direction.

On the heat dissipation surface of the soundproof heat-dissipation cover 3 according to the embodiment, the strips 15 are formed. In the state in which the pair of second attachment parts 21 of the reinforcement member 4 are attached to the pair of first attachment parts 13 of the soundproof heat-dissipation cover 3, the strips 15 of the soundproof heat-dissipation cover 3 abut against the bridging part 22 of the reinforcement member 4. According to the embodiment, heat can be transferred from the strips 15 to the reinforcement member 4 without the intervening air layer. Therefore, the heat-dissipation performance of the cover member 1 can be improved.

Among the reference numerals used in Embodiment 2 and subsequent embodiments, those that are identical to the reference numerals used in the previously described embodiment represent the same or similar components as in the previously described embodiment, unless otherwise specified.

## Claims

1. A soundproof heat-dissipation cover (3), covering a target object (2) and comprising:
a heat-dissipation contact surface (10), having a contact part (12) that comes into contact with the target object,
wherein a density of the soundproof heat-dissipation cover is 0.1 g/cm³ to 2.0 g/cm³,
a thermal conductivity of the soundproof heat-dissipation cover is 0.1 W/mK to 2.0 W/mK, and
a maximum height roughness of the heat-dissipation contact surface is 50 µm to 300 µm.

2. The soundproof heat-dissipation cover according to claim 1, wherein the maximum height roughness (Rz) of the heat-dissipation contact surface is 60 µm to 250 µm.

3. The soundproof heat-dissipation cover according to claim 2, wherein the maximum height roughness of the heat-dissipation contact surface is 110 µm to 200 µm.

4. The soundproof heat-dissipation cover according to claim 1, wherein the soundproof heat-dissipation cover is formed in a sheet-like shape by using foamed resin, and
further comprises:
a foam layer (3b) having bubbles; and
a skin layer (3a) formed outward in a thickness direction relative to the foam layer and having fewer bubbles than the bubbles of the foam layer,
wherein the heat-dissipation contact surface is formed on the skin layer.

5. The soundproof heat-dissipation cover according to claim 1, wherein the soundproof heat-dissipation cover is formed in a sheet-like shape,
the soundproof heat-dissipation cover further comprises a thermal conductive material that extends along a thickness direction.

6. The soundproof heat-dissipation cover according to claim 1, wherein the thermal conductivity is 0.5 W/mK to 0.7 W/mK.

7. A cover member (1), comprising: the soundproof heat-dissipation cover according to any one of claims 1 to 6 and comprising a heat-dissipation surface (11) on a side opposite to the heat-dissipation contact surface; and
a reinforcement member (4), formed of a material having a higher hardness than the soundproof heat-dissipation cover, and covering the soundproof heat-dissipation cover from a side of the heat-dissipation surface of the soundproof heat-dissipation cover,
the soundproof heat-dissipation cover further comprises:
a pair of first attachment parts (13), formed at positions near two ends in a first direction along the heat-dissipation contact surface, and
a heat-dissipation region (14), formed between the pair of first attachment parts, and
the reinforcement member comprises:
a pair of second attachment parts (21), formed at positions near two ends in the first direction and respectively attached to the pair of first attachment parts; and
a bridging part (22), bridging the pair of second attachment parts and having a plurality of through holes (31),
wherein the heat-dissipation contact surface is formed at a position that overlaps with at least the heat-dissipation region in a thickness direction of the soundproof heat-dissipation cover.

8. The cover member according to claim 7, wherein a plurality of strips (15) arranged at intervals are formed on the heat-dissipation surface of the soundproof heat-dissipation cover, and
in a state in which the pair of second attachment parts of the reinforcement member are attached to the pair of first attachment parts of the soundproof heat-dissipation cover, the strips of the soundproof heat-dissipation cover abut against the bridging part of the reinforcement member.

9. A manufacturing method of the soundproof heat-dissipation cover according to any one of claims 1 to 6, the manufacturing method comprising:
a molding process (S3) of molding the soundproof heat-dissipation cover by injecting resin into a mold (40) having a rough surface (41b) for molding the heat-dissipation contact surface and then curing the resin,
wherein a maximum height roughness of the rough surface is 50 µm to 300 µm.

10. The manufacturing method of the soundproof heat-dissipation cover according to claim 9, wherein, in the molding process, a shape of the rough surface of the mold is transferred to the heat-dissipation contact surface of the soundproof heat-dissipation cover.

11. The manufacturing method of the soundproof heat-dissipation cover according to claim 9, wherein, in the molding process, the maximum height roughness of the heat-dissipation contact surface of the soundproof heat-dissipation cover is formed to be greater than the maximum height roughness of the rough surface of the mold.

12. The manufacturing method of the soundproof heat-dissipation cover according to claim 9, further comprising:
a roughening process (S1) of roughening at least a portion of an inner surface of the mold.

13. The manufacturing method of the soundproof heat-dissipation cover according to claim 12, wherein, in the roughening process, at least a portion of the inner surface of the mold is roughened by blast processing.

14. The manufacturing method of the soundproof heat-dissipation cover according to claim 12, wherein the mold is formed of metal or resin, and
in the roughening process, at least a portion of the inner surface of the mold is roughened by embossing processing.

15. The manufacturing method of the soundproof heat-dissipation cover according to claim 9, wherein, in the molding process, a foaming process of foaming resin is executed.

16. The manufacturing method of the soundproof heat-dissipation cover according to claim 9, wherein the resin molded in the molding process comprises a thermal conductive material.

## Patentansprüche

1. Schalldämmende Wärmeableitungsabdeckung (3), die ein Zielobjekt (2) abdeckt und umfasst:
eine Wärmeableitungs-Kontaktfläche (10) mit einem Kontaktteil (12), das mit dem Zielobjekt in Kontakt kommt,
wobei eine Dichte der schalldämmenden Wärmeableitungsabdeckung 0,1 g/cm³ bis 2,0 g/cm³ beträgt,
eine Wärmeleitfähigkeit der Schalldämmenden Wärmeableitungsabdeckung 0,1 W/mK bis 2,0 W/mK beträgt und
eine maximale Rautiefe der Wärmeableitungs-Kontaktfläche 50 µm bis 300 µm beträgt.

2. Schalldämmende Wärmeableitungsabdeckung nach Anspruch 1, wobei die maximale Rautiefe (Rz) der Wärmeableitungs-Kontaktfläche 60 µm bis 250 µm beträgt.

3. Schalldämmende Wärmeableitungsabdeckung nach Anspruch 2, wobei die maximale Rautiefe der Wärmeableitungs-Kontaktfläche 110 µm bis 200 µm beträgt.

4. Schalldämmende Wärmeableitungsabdeckung nach Anspruch 1, wobei die schalldämmende Wärmeableitungsabdeckung unter Verwendung von geschäumtem Harz in blattförmig ausgebildet ist und
ferner umfasst:
eine Schaumschicht (3b) mit Blasen; und
eine Hautschicht (3a), die in einer Dickenrichtung relativ zu der Schaumschicht nach außen ausgebildet ist und weniger Blasen als die Schaumschicht aufweist,
wobei die Wärmeableitungs-Kontaktfläche auf der Hautschicht ausgebildet ist.

5. Schalldämmende Wärmeableitungsabdeckung nach Anspruch 1, wobei die schalldämmende Wärmeableitungsabdeckung blattförmig ausgebildet ist,
die schalldämmende Wärmeableitungsabdeckung ferner ein wärmeleitendes Material umfasst, das sich entlang einer Dickenrichtung erstreckt.

6. Schalldämmende Wärmeableitungsabdeckung nach Anspruch 1, wobei die Wärmeleitfähigkeit 0,5 W/mK bis 0,7 W/mK beträgt.

7. Abdeckungselement (1), umfassend: die schalldämmende Wärmeableitungsabdeckung nach einem der Ansprüche 1 bis 6 und umfassend eine Wärmeableitungsfläche (11) auf einer Seite gegenüber der Wärmeableitungs-Kontaktfläche; und
ein Verstärkungselement (4), das aus einem Material mit einer höheren Härte als die schalldämmende Wärmeableitungsabdeckung gebildet ist und die schalldämmende Wärmeableitungsabdeckung von einer Seite der Wärmeableitungsfläche der schalldämmenden Wärmeableitungsabdeckung abdeckt,
wobei die schalldämmende Wärmeableitungsabdeckung ferner umfasst:
ein Paar erste Befestigungsteile (13), die an Positionen nahe zwei Enden in einer ersten Richtung entlang der Wärmeableitungs-Kontaktfläche ausgebildet sind, und
einen Wärmeableitungsbereich (14), der zwischen dem Paar erster Befestigungsteile ausgebildet ist, und das Verstärkungselement umfasst:
ein Paar zweite Befestigungsteile (21), die an Positionen nahe zwei Enden in der ersten Richtung ausgebildet sind und jeweils an dem Paar erste Befestigungsteile befestigt sind; und
ein Brückenteil (22), das das Paar zweite Befestigungsteile überbrückt und eine Vielzahl von Durchgangslöchern (31) aufweist,
wobei die Wärmeableitungs-Kontaktfläche an einer Position ausgebildet ist, die sich zumindest mit dem Wärmeableitungsbereich in einer Dickenrichtung der schalldämmenden Wärmeableitungsabdeckung überlappt.

8. Abdeckungselement nach Anspruch 7, wobei eine Vielzahl von in Abständen angeordnete Streifen (15) auf der Wärmeableitungsfläche der schalldämmenden Wärmeableitungsabdeckung ausgebildet sind und
in einem Zustand, in dem das Paar zweite Befestigungsteile des Verstärkungselements an dem Paar erste Befestigungsteile der schalldämmenden Wärmeableitungsabdeckung befestigt ist, die Streifen der schalldämmenden Wärmeableitungsabdeckung an dem Brückenteil des Verstärkungselements anliegen.

9. Herstellungsverfahren für die schalldämmende Wärmeableitungsabdeckung nach einem der Ansprüche 1 bis 6, wobei das Herstellungsverfahren umfasst:
einen Formungsprozess (S3) zum Formen der schalldämmenden Wärmeableitungsabdeckung durch Einspritzen von Harz in eine Form (40) mit einer rauen Oberfläche (41b) zum Formen der Wärmeableitungs-Kontaktfläche und anschließendes Aushärten des Harzes,
wobei eine maximale Rautiefe der rauen Oberfläche 50 µm bis 300 µm beträgt.

10. Herstellungsverfahren für die schalldämmende Wärmeableitungsabdeckung nach Anspruch 9, wobei bei dem Formungsprozess eine Form der rauen Oberfläche der Form auf die Wärmeableitungs-Kontaktfläche der schalldämmenden Wärmeableitungsabdeckung übertragen wird.

11. Verfahren zur Herstellung der schalldämmenden Wärmeableitungsabdeckung nach Anspruch 9, wobei bei dem Formungsprozess die maximale Rautiefe der Wärmeableitungs-Kontaktfläche der schalldämmenden Wärmeableitungsabdeckung so ausgebildet wird, dass sie größer als die maximale Rautiefe der rauen Oberfläche der Form ist.

12. Herstellungsverfahren für die schalldämmende Wärmeableitungsabdeckung nach Anspruch 9, ferner umfassend:
einen Aufrauungsprozess (S1) zum Aufrauen mindestens eines Abschnitts einer Innenfläche der Form.

13. Verfahren zur Herstellung der schalldämmenden Wärmeableitungsabdeckung nach Anspruch 12, wobei bei dem Aufrauungsprozess mindestens ein Abschnitt der Innenfläche der Form durch Strahlbehandlung aufgeraut wird.

14. Verfahren zur Herstellung der schalldämmenden Wärmeableitungsabdeckung nach Anspruch 12, wobei die Form aus Metall oder Kunststoff gebildet ist und
bei dem Aufrauungsprozess mindestens ein Abschnitt der Innenfläche der Form durch Prägebehandlung aufgeraut wird.

15. Verfahren zur Herstellung der schalldämmenden Wärmeableitungsabdeckung nach Anspruch 9, wobei bei dem Formungsprozess ein Aufschäumprozess des Harzes durchgeführt wird.

16. Verfahren zur Herstellung der schalldämmenden Wärmeableitungsabdeckung nach Anspruch 9, wobei das bei dem Formungsprozess geformte Harz ein wärmeleitendes Material umfasst.

## Revendications

1. Couverture insonorisante dissipant la chaleur (3), recouvrant un objet cible (2) et comprenant:
une surface de contact dissipant la chaleur (10), comportant une partie de contact (12) qui entre en contact avec l'objet cible, dans laquelle la densité de la couverture insonorisante dissipant la chaleur est comprise entre 0,1 g/cm³ et 2,0 g/cm³,
une conductivité thermique de la couverture insonorisante dissipant la chaleur comprise entre 0,1 W/mK et 2,0 W/mK, et
une rugosité de hauteur maximale de la surface de contact dissipant la chaleur comprise entre 50 µm et 300 µm.

2. Couverture insonorisante dissipant la chaleur selon la revendication 1, dans laquelle la rugosité maximale en hauteur (Rz) de la surface de contact dissipant la chaleur est comprise entre 60 µm et 250 µm.

3. Couverture insonorisante dissipant la chaleur selon la revendication 2, dans laquelle la rugosité maximale en hauteur de la surface de contact dissipant la chaleur est comprise entre 110 µm et 200 µm.

4. Couverture insonorisante dissipant la chaleur selon la revendication 1, dans laquelle la couverture insonorisante dissipant la chaleur est formée en une forme de feuille à l'aide d'une résine expansée, et
comprend en outre:
une couche de mousse (3b) comportant des bulles; et
une couche de peau (3a) formée vers l'extérieur dans le sens de l'épaisseur par rapport à la couche de mousse et comportant moins de bulles que la couche de mousse, dans lequel la surface de contact dissipant la chaleur est formée sur la couche de peau.

5. Couverture insonorisante dissipant la chaleur selon la revendication 1, dans laquelle la couverture insonorisante dissipant la chaleur est formée sous une forme en feuille,
la couverture insonorisante dissipant la chaleur comprend en outre un matériau thermoconducteur qui s'étend dans le sens de l'épaisseur.

6. Couverture insonorisante dissipant la chaleur selon la revendication 1, dans laquelle la conductivité thermique est comprise entre 0,5 W/mK et 0,7 W/mK.

7. Élément de couverture (1), comprenant:
la couverture insonorisante dissipant la chaleur selon l'une des revendications 1 à 6 et comprenant une surface dissipant la chaleur (11) sur un côté opposé à la surface de contact dissipant la chaleur; et
un élément de renfort (4), formé d'un matériau ayant une dureté supérieure à celle de la couverture insonorisante dissipant la chaleur, et recouvrant la couverture insonorisante dissipant la chaleur depuis un côté de la surface dissipant la chaleur de la couverture insonorisante dissipant la chaleur,
la couverture insonorisante dissipant la chaleur comprenant en outre:
une paire de premières parties de fixation (13), formées à des positions proches des deux extrémités dans une première direction le long de la surface de contact dissipant la chaleur, et
une région de dissipation thermique (14), formée entre la paire de premières parties de fixation, et l'élément de renfort comprend:
une paire de deuxièmes pièces de fixation (21), formées à des positions proches des deux extrémités dans la première direction et respectivement fixées à la paire de premières pièces de fixation ; et
une partie de pontage (22), reliant la paire de secondes parties de fixation et comportant une pluralité de trous traversants (31), dans lequel la surface de contact dissipant la chaleur est formée à une position qui chevauche au moins la région de dissipation thermique dans une direction d'épaisseur de la couverture insonorisante dissipant la chaleur.

8. Élément de couverture selon la revendication 7, dans lequel une pluralité de bandes (15) disposées à intervalles réguliers sont formées sur la surface de contact dissipant la chaleur de la couverture insonorisante dissipant la chaleur, et dans un état dans lequel la paire de secondes parties de fixation de l'élément de renfort est fixée à la paire de premières parties de fixation de la couverture insonorisante dissipant la chaleur, les bandes de la couverture insonorisante dissipant la chaleur butent contre la partie de pontage de l'élément de renfort.

9. Procédé de fabrication de la couverture insonorisante dissipant la chaleur selon l'une des revendications 1 à 6, le procédé de fabrication comprenant:
un processus de moulage (S3) consistant à mouler la couverture insonorisante dissipant la chaleur en injectant de la résine dans un moule (40) ayant une surface rugueuse (41b) pour mouler la surface de contact dissipant la chaleur, puis en durcissant la résine, dans lequel la rugosité maximale en hauteur de la surface rugueuse est comprise entre 50 µm et 300 µm.

10. Procédé de fabrication de la couverture insonorisante dissipant la chaleur selon la revendication 9, dans lequel, dans le processus de moulage, une forme de la surface rugueuse du moule est transférée à la surface de contact dissipant la chaleur de la couverture insonorisante dissipant la chaleur.

11. Procédé de fabrication de la couverture insonorisante dissipant la chaleur selon la revendication 9, dans lequel, lors du processus de moulage, la rugosité maximale en hauteur de la surface de contact dissipant la chaleur de la couverture insonorisante dissipant la chaleur est formée de manière à être supérieure à la rugosité maximale en hauteur de la surface rugueuse du moule.

12. Procédé de fabrication de la couverture insonorisante dissipant la chaleur selon la revendication 9, comprenant en outre: un processus de rugosification (S1) consistant à rugosifier au moins une partie d'une surface intérieure du moule.

13. Procédé de fabrication de la couverture insonorisante dissipant la chaleur selon la revendication 12, dans lequel, dans le processus de rugosification, au moins une partie de la surface intérieure du moule est rugosifiée par un traitement par projection.

14. Procédé de fabrication de la couverture insonorisante dissipant la chaleur selon la revendication 12, dans lequel le moule est formé de métal ou de résine, et
dans le processus de rugosification, au moins une partie de la surface intérieure du moule est rugosifiée par un traitement d'embossage.

15. Procédé de fabrication de la couverture insonorisante dissipant la chaleur selon la revendication 9, dans lequel, lors du processus de moulage, un processus de moussage de la résine est effectué.

16. Procédé de fabrication de la couverture insonorisante dissipant la chaleur selon la revendication 9, dans lequel la résine moulée lors du processus de moulage comprend un matériau thermoconducteur.
